# EUROPÄISCHE PATENTSCHRIFT

(11) **EP 2 110 971 B1**
(45) Veröffentlichungstag und Bekanntmachung des Hinweises auf die Patenterteilung: **12.01.2011**
(21) Anmeldenummer: 09004541.0
(22) Anmeldetag: 30.03.2009
(51) Int. Cl.: H04B 10/10, H04B 10/148, H04B 10/158

(54) **Verfahren zur atmosphärischen optischen Freiraumübertragung von digitalen Signalen und Empfänger für das Verfahren**
Method for atmospheric optical free space transfer of digital signals and recipients for the method
Procédé destiné à la transmission d'espace vide optique atmosphérique de signaux numériques et récepteur pour le procédé

(30) Priorität: 15.04.2008 DE 102008019066
(43) Veröffentlichungstag der Anmeldung: 21.10.2009
(73) Patentinhaber: Deutsches Zentrum für Luft- und Raumfahrt e. V., 51147 Köln (DE)
(72) Erfinder: Perlot, Nicolas, Dr., 82205 Gilching (DE)
(74) Vertreter: von Kreisler Selting Werner

(56) Entgegenhaltungen:
- DE-A1-102006 030 915
- US-A1- 2002 085 265
- LEONID G KAZOVSKY ET AL: "Homodyne Phase-Shift-Keying Systems: Past Challenges and Future Opportunities" JOURNAL OF LIGHTWAVE TECHNOLOGY, IEEE SERVICE CENTER, NEW YORK, NY, US, Bd. 24, Nr. 12, 1. Dezember 2006 (2006-12-01), Seiten 4876-4884, XP011155998 ISSN: 0733-8724

## Beschreibung

Die Erfindung betrifft ein Verfahren zur atmosphärischen optischen Freiraumübertragung von digitalen Signalen, wobei sendeseitig ein Laserstrahl mittels einer einen inkohärenten Empfang mit direkter Detektion erlaubenden Modulation, also nicht nur mit der einen pseudo-inkohärenten Direktdetektionsempfang ermöglichenden DPSK-Modulation moduliert wird und empfangsseitig in einem Demodulator eine inkohärent ausgeführte Direktdetektion vorgenommen wird.

Die Erfindung betrifft auch einen Empfänger zur Verwendung bei einem Verfahren zur atmosphärischen optischen Freiraumübertragung von digitalen Signalen.

Wenn sich eine Laserstrahlwelle durch die turbulente Atmosphäre ausbreitet, verliert sie ihre räumliche Kohärenz und schwankt zufällig in der Phase und Amplitude. Diese zufälligen Schwankungen beeinflussen verschiedene Arten von Empfängern unterschiedlich.

Bei den dem Stand der Technik entsprechenden atmosphärischen optischen Freiraum-Kommunikationsverfahren sind die Empfangsverfahren in zwei Kategorien unterteilt, nämlich das inkohärente und das kohärente Empfangsverfahren. Das inkohärente Empfangsverfahren wird auch als Empfangsverfahren mit Direktdetektion bezeichnet.

Beim inkohärenten Empfangsverfahren wird eine direkte Detektion ausgeführt, d.h. die Wellenenergie wird direkt detektiert. Diese Art von Detektion erlaubt, wie später noch im Einzelnen ausgeführt wird, die verschiedenartigsten Modulationen wie z.B. On-Off-Keying (OOK), d.h. eine Trägerumtastung, bei der der Träger ein- und ausgeschaltet wird, oder die Pulslagenmodulation (PPM; Pulse Position Modulation).

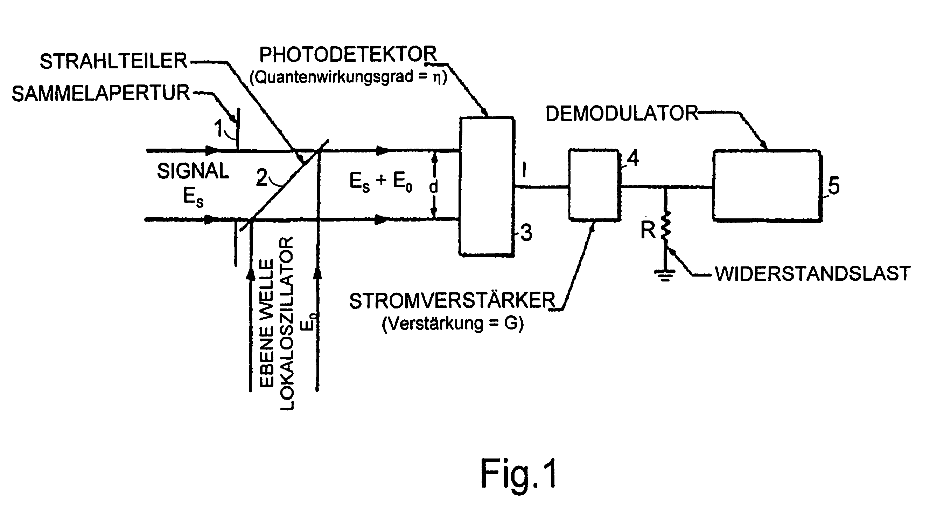

Beim kohärenten Empfangsverfahren weist der Empfänger einen zweiten Laser auf, der als "Lokaloszillator" bezeichnet wird und dessen erzeugte Welle vor der Detektion mit der empfangenen Welle überlagert wird. Dies ermöglicht das Detektieren von Phasen-, Frequenz- oder Amplitudenverschiebungen der Welle und somit das Decodieren der zugrundeliegenden Bitinformation. Fig.1 zeigt den Aufbau eines optischen Heterodyn-Empfängers, wie er z.B. aus dem Artikel von K. A. Winick: "Atmospheric turbulence-induced signal fades on optical heterodyne communication links", Appl. Opt. 25, Seiten 1817-1825, (1986) bekannt ist.

Entsprechend der Darstellung in Fig.1 fällt eine Empfangssignalwelle E_{S} im Empfänger über eine Sammelapertur 1 ein und trifft auf einen Strahlteiler 2, der senkrecht zur Empfangssignalwelle E_{S} noch von einer ebenen Welle E₀ eines Lokaloszillators bestrahlt wird. Die beiden Wellen E_{S} und E₀ überlagern sich zu einer Überlagerungswelle Es + E₀, die zu einem Photodetektor 3 mit einem Durchmesser d gelangt. Der detektierte Ausgangsstrom I des Photodetektors 3 wird zu einem Stromverstärker 4 mit einer Verstärkung G geleitet und gelangt schließlich an einen Demodulator 5, wobei als Querglied davor noch eine Widerstandslast R vorgesehen ist.

Die Vorteile des kohärenten Empfangsverfahrens mit Lokaloszillator im Vergleich zu einem Empfangsverfahren mit direkter Detektion bestehen im Hinblick auf die atmosphärischen Bedingungen darin, dass beim kohärenten Empfangsverfahren eine höhere Geschütztheit gegen Hintergrundlicht erreicht wird und ein kohärenter Empfänger auf die einfallende Welle empfindlicher als ein Empfänger mit direkter Detektion ist. Ein gut gestalteter kohärenter Empfänger weist ein vernachlässigbares thermisches Rauschen auf.

Der Nachteil des kohärenten Empfangsverfahrens ist jedoch darin zu sehen, dass ein kohärenter Empfänger an einem schlechten Überlagerungswirkungsgrad leidet, wenn die einfallende Wellenfront verzerrt ist. Da es bei einem Empfänger mit direkter Detektion keine Überlagerung optischer Wellen besteht, gibt es dort auch keinen einem Überlagerungswirkungsgrad zugeordneten Verlust.

Das Hauptproblem einer kohärenten Detektion ist daher die durch atmosphärische Ausbreitung herbeigeführte Wellenfrontverzerrung. Wenn eine verzerrte Wellenfront empfangen wird, passt diese nicht mit der ebenen Front einer Lokaloszillatorwelle zusammen. Die beiden Wellen mischen sich schlecht und der Überlagerungswirkungsgrad ist kleiner als eins. Im Artikel von D. L. Fried: "Optical heterodyne detection of an atmospherically distorted signal wave front", Proc. IEEE 55, Seiten 57-66, 1967 ist aufgezeigt, dass eine Verschlechterung des Überlagerungswirkungsgrads einem Verlust in Bezug auf das Signal/Rausch-Verhältnis (SNR) entspricht.

Die Wellenfrontverzerrungen werden vorteilhaft durch den Fried-Parameter *r*₀, der auch als atmosphärischer Kohärenzdurchmesser bezeichnet wird, gekennzeichnet. Je kleiner der Parameter *r*₀ ist, desto größer sind die Wellenfrontverzerrungen. Ist D der Durchmesser des Empfangsteleskops, dann gilt als Faustregel, dass
- wenn *r*₀>>D, dann ist der Überlagerungswirkungsgrad nahe seinem Maximum (d.h. nahe bei 1),
- wenn *r*₀<<D, dann ist der Überlagerungswirkungsgrad viel kleiner als 1.

Der Parameter *r*₀ variiert über viele Einflussgrößen. Die relevantesten Einflussgrößen davon sind der Verbindungsabstand, die Tageszeit (Sonnenerwärmung), die Höhe über dem Boden, die Art der Bodenoberfläche unter dem Strahlpfad und der Elevationswinkel über dem Horizont.

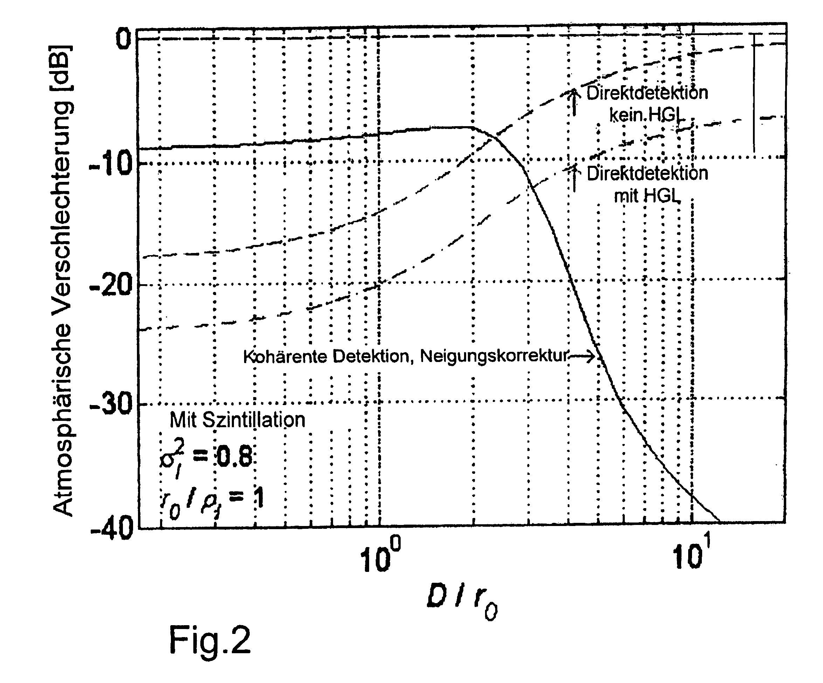

Fig.2 zeigt typische Verschlechterungskurven für eine kohärente Detektion und für direkte Detektionen. Die durchgezogene Kurve stellt die kohärente Detektion dar, wobei die Neigung der Wellenfront vor der Detektion korrigiert worden ist. Gewöhnlich wird eine Neigungskorrektur in einem optischen Freiraum-Kommunikationssystem ausgeführt. Wenn das Verhältnis *D*/*r*₀ groß wird, sinkt die Leistungsfähigkeit der kohärenten Detektion. Wenn *D*/*r*₀ klein ist, werden Techniken mit kohärenter und direkter Detektion durch atmosphärische Szintillation (Szintillation ist die Schwankung der optischen Leistung) verschlechtert. Hierbei wird die Szintillation durch die Parameter σ₁² - 0,8 und ρ₁ = *r*₀ charakterisiert (L. Andrews und R. Phillips: "Laser Beam Propagation through Random Media", 2nd Edition, SPIE Press, Bellingham, WA, 2005).

Weil Systeme mit kohärenter Detektion einen Lokaloszillator benutzen und schrotrauschbegrenzt sind, sind sie hinsichtlich Szintillation und Hintergrundlicht robuster als ihre Gegenstücke mit direkter Detektion. Die beiden gestrichelten Kurven in Fig.2 zeigen typische Verschlechterungen bei Verwendung direkter Detektion mit bzw. ohne Hintergrundlicht (HGL) ab.

Wenn der Aperturdurchmesser D größer als *r*₀ und auch als ρ₁ ist, wird die Szintillation durch Aperturmittelung verringert. Dies erklärt, warum sich die Direktdetektionskurven verbessert, wenn *D*/*r*₀ zunimmt. Für die direkte Detektion wird eine Verschlechterung von -6 dB infolge des Hintergrundlichtes (HGL) beobachtet. Eine Hintergrundlicht(HGL)-Verschlechterung in dieser Größenordnung kann auftreten, wenn der Empfänger nahe in Richtung zur Sonne schaut. (Die Hintergrundlicht(BGL)-Verschlechterung ist viel höher, wenn der Empfänger direkt zur Sonne hinschaut).

Aus Fig.2 kann abgeleitet werden, dass eine Fähigkeit zum Umschalten zwischen kohärenter und direkter Detektion die Leistungsfähigkeit des optischen Empfängers signifikant verbessern kann.

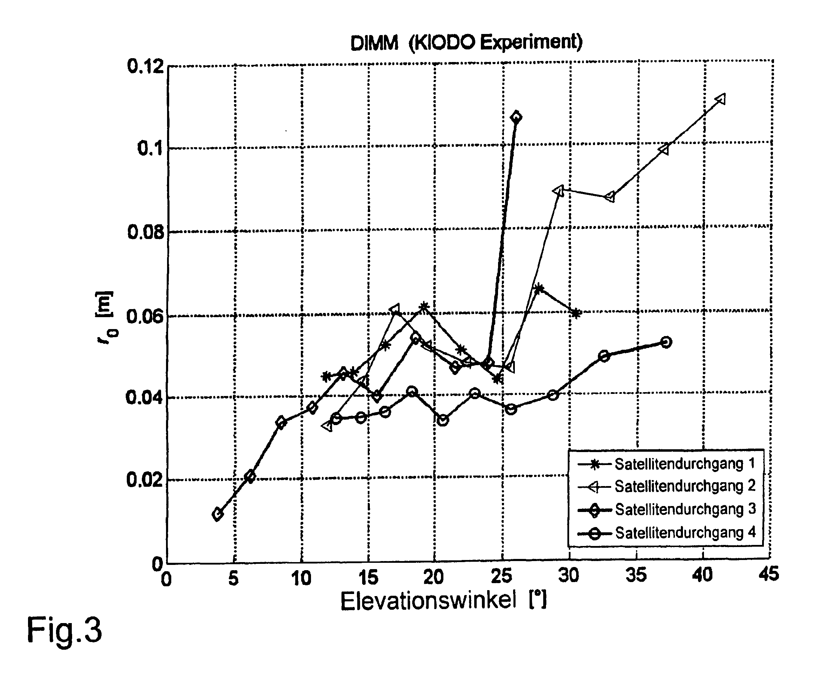

Fig.3 zeigt Veränderungen von *r*₀ in Abhängigkeit vom Elevationswinkel für eine optische Freiraum-Satelliten-Abwärtsverbindung (Downlink). Die in Fig.3 gezeichneten, experimentellen *r*₀-Werte wurden während optischer Downlinks von einem Satelliten gemessen. Alle Werte sind zur etwa gleichen Tageszeit gemessen worden. Man beobachtet, dass der Wert von *r*₀ bei 3° Elevation etwa 20-mal kleiner sein kann als derjenige bei 30° Elevation. Eine sogar höhere Veränderung ist zwischen 0° und 90° Elevation und zwischen Tag und Nacht zu erwarten.

Bei den bisher bekannten Lösungen zum Erzielen atmosphärischer optischer Kommunikationsverbindungen besteht somit der Nachteil, dass eine Modulation und eine Empfängerart gewählt werden müssen, die am Besten mit den atmosphärischen Schwankungen umgehen.

Wird ein kohärentes Empfangsverfahren gewählt, so muss dabei das Problem von Wellenfrontverzerrungen gelöst werden, indem entweder der Teleskopdurchmesser D kleiner als der Parameter *r*₀ gehalten wird oder auf adaptive Optiken zurückgegriffen wird, die teuer, komplex, für einen begrenzten Bereich des Parameters *r*₀ gestaltet und gewöhnlich zu langsam im Vergleich zur atmosphärischen Bandbreite sind.

Gewöhnlich wird deswegen eine Intensitätsmodulation mit Direktdetektion wegen deren Unempfindlichkeit gegenüber Phasenschwankungen gewählt. In diesem Fall wird allerdings auf die Vorteile eines kohärenten Empfangsverfahrens verzichtet.

In der deutschen Patentanmeldung 10 2008 005 791.6 ist bereits ein Verfahren zur atmosphärischen optischen Freiraumübertragung von digitalen Signalen unter Verwendung von Differential-Phase-Shift-Keying (DPSK) vorgeschlagen worden. Hierbei wird sendeseitig ein Laserstrahl mittels eines differentiell codierten Modulationssignals moduliert und empfangsseitig in einem Demodulator das interferometrische Self-Homodyne-Prinzip angewandt, bei dem der empfangene Laserstrahl in zwei Teilstrahlen aufgespalten wird, von denen der eine Teilstrahl um eine Bitdauer verzögert und mit dem anderen, unverzögerten Teilstrahl zu einem Überlagerungsstrahl überlagert wird, der danach einer Detektion zugeführt wird, die sich im Ergebnis im Wesentlichen wie eine inkohärent ausgeführte Direktdetektion verhält.

Empfangsseitig wird zusätzlich in einem kohärenten, mit einem Laser-Lokaloszillator betriebenen Phasendemodulator mit nachfolgender, elektrisch betriebener Bit-zu-Bit-Differenzschaltung eine zweite Detektion durchgeführt und die zwei mittels der beiden Demodulatoren detektierten elektrischen Signale werden diversitätsbildend einem signaloptimierenden Auswahl-oder Kombinierverfahren unterzogen.

Ein Nachteil dieses vorgeschlagenen Verfahrens kann jedoch darin gesehen werden, dass das Signal eine DPSK-Modulation haben muss. Ein Laser-Kommunikationsendgerät auf einem Satelliten z.B. kann eine von DPSK abweichende Signalmodulation übertragen und ein solches Endgerät kann nicht mehr verändert werden. Außerdem ist ein DPSK-Empfänger mit direkter Detektion in der Praxis nicht leicht zu implementieren. Die Hauptschwierigkeit bei der Implementierung ist die Einführung einer Verzögerung der Dauer eines Bits in den empfangenen Strahl ohne Veränderung der Wellenfrontverzerrungen des Strahls. Die Verzögerung wird durch Verlängern des optischen Pfades des Strahls eingeführt.

Eine Bitdauer für ein 100 Mbit/s-Signal entspricht einer optischen Pfadlänge von 3 m im Vakuum, was etwa 2 m in einer Faser entspricht. Weil die Wellenfrontverzerrungen des LaserStrahls nicht verändert werden können, kann der optische Pfad nicht durch eine optische Faser gehen (Mode-Mischung erfolgt in den Fasern) und muss im freien Raum verlaufen. Innerhalb des Empfängers kann der dem optischen Freiraumpfad zugeordnete Raum durch Verwendung von Spiegeln reduziert werden. Allerdings müssen die Spiegeloberflächen unter verschiedenen Temperaturbedingungen extrem flach sein (in der Größenordnung einer Wellenlänge) und solche Spiegel sind sehr teuer.

Ein weiteren Verfahren zur optischen Freiraum übertragung ist aus dem Artikel LEONID G KAZOVSKY ET AL: "Homodyne Phase-Shift-Keying Systems: Past Challenges and Future Opportunities" JOURNAL OF LIGHTWAVE TECHNOLOGY, IEEE SERVICE CENTER, NEW YORK, NY, US, Bd. 24, Nr. 12, 1. Dezember 2006 (2006-12-01), Seiten 4876-4884, XP011155998 ISSN: 0733-8724 bekannt.

Der Erfindung liegt die Aufgabe zu Grunde, ohne Verwendung der relevante Probleme bereitenden DPSK-Modulation die Über-tragung eines optischen Signals durch die Atmosphäre im Vergleich zu den bisher bekannt gewordenen Übertragungsverfahren im Freiraum zu verbessern. Es soll darüber hinaus auch ein

Empfängeraufbau geschaffen werden, der sich bei dem verbesserten optischen Freiraumübertragungsverfahren vorteilhaft einsetzen lässt.

Gemäß der Erfindung, die sich auf ein Verfahren der eingangs genannten Art bezieht, wird diese Aufgabe dadurch gelöst, dass empfangsseitig zusätzlich in einem kohärenten, mit einem Laser-Lokaloszillator betriebenen Demodulator eine zweite Detektion durchgeführt wird und dass die zwei mittels der beiden Demodulatoren detektierten elektrischen Signale diversitätsbildend einem signaloptimierenden Auswahl- oder Kombinierverfahren unterzogen werden.

Bei dem Verfahren nach der vorliegenden Erfindung werden die Vorteile sowohl der kohärenten als auch der inkohärenten Technik ausgenutzt.

Durch das Verfahren nach der vorliegenden Erfindung wird der Anwendungsbereich der atmosphärischen optischen Kommunikation erweitert.

Wenn *r*₀<D, wird ein Sicherungsempfang (Backup-Receiver) bereitgestellt.

Das Verfahren nach der vorliegenden Erfindung zeichnet sich dadurch aus, dass das Grundprinzip dieser Diversitätstechnik auf andere Modulationsformate, also nicht nur auf DPSK, angewandt werden kann.

In S.B. Alexander: "Optical Communication Receiver Design", SPIE Optical Engineering Press, Bellingham, Wash., USA, 1997 ist auf Seite 229 ein Überblick über die Fähigkeiten der direkten Detektion abgegeben. Danach werden mit direkter Detektion arbeitende Empfänger typischerweise so betrachtet, als seien sie fähig, lediglich auf Intensitätsschwankungen im empfangenen optischen Signal anzusprechen. Phasen-, Frequenz-und Polarisationsinformationen werden in einem Kommunikationssystem mit direkter Detektion häufig als verloren angesehen.

Durch Gebrauchen zusätzlicher optischer Elemente ist es jedoch möglich, mit Direktdetektion arbeitende Empfänger zu bauen, die auf polarisations-, frequenz- oder phasenmodulierte Signale ansprechen. Es ist z.B. möglich, einen Kommunikationsempfänger zu bauen, der ein FSK-Signal demodulieren könnte, indem ein optischer Frequenzdiskriminator wie z.B. ein Fabry-Perot- oder Mach-Zehnder-Interferometer vor dem Photodetektor angebracht wird (I. Kaminow: "Balanced Optical Discriminator", Applied Optics, 1964, Vol. 3, Nr. 4, Seiten 507-510).

Ein mit direkter Detektion arbeitender Empfänger unter Verwendung eines Mach-Zehnder-Interferometers kann auch verwendet werden, um DPSK zu demodulieren (R. Vodhanel et al: "Performance of Directly Modulated DFB Lasers in 10 Gb/s ASK, FSK and DPSK Lightwave Systems", Journal of Lightwave Technology, 1990, Vol. LT-8, Nr. 9, Seiten 1379-1386).

Um Detektionsdiversität vorzusehen, kann daher der Blick auf vorteilhaftere Modulationen als DPSK gerichtet werden. ASK (Amplitude Shift Keying) insbesondere ist ein einfaches Modulationsformat, das leicht auszuführen ist. Das direkt-detektierte ASK-Signal lässt sich tatsächlich als ein gewöhnliches On-Off-Keying-Signal betrachten. Als Modulationsformat kann auch FSK (Frequency Shift Keying) oder PolSK (Polarisation Shift Keying) verwendet werden.

Gemäß einer vorteilhaften Ausgestaltung des Verfahrens nach der vorliegenden Erfindung besteht die Möglichkeit zum Überwachen von atmosphärischen Parametern und zum Anpassen der Empfängerkonfiguration entsprechend dem Wert dieser Parameter.

Zu diesem Zweck lassen sich Wellenfrontverzerrungen des empfangsseitig einfallenden optischen Strahls messen oder schätzen. In Abhängigkeit von der gemessenen bzw. geschätzten Wellenfrontverzerrung wird dann auf den einen oder anderen der beiden Demodulatoren mehr optische Leistung auf Kosten des jeweils anderen Demodulators gerichtet.

Die Wellenfrontverzerrungen des einfallenden optischen Strahls können anhand des sogenannten Fried-Parameters *r*₀ bestimmt werden, der auch als Kohärenzdurchmesser bezeichnet wird, wobei gilt, dass je kleiner der Parameter *r*₀ ist, desto größer die Wellenfrontverzerrungen sind.

In vorteilhafter Weise können die Wellenfrontverzerrung des einfallenden Strahls mittels einer CCD-Kamera bestimmt werden, der ein abgezweigter Teilstrahl des über ein Empfangsteleskop einfallenden Strahls zugeführt wird, wobei mit der CCD-Kamera der Brennfleck des Empfangsteleskops beobachtet und aus der Größe des Brennflecks auf die Frontverzerrung des einfallenden Strahls geschlossen wird und wobei gilt, dass die mittlere Größe des Brennflecks umgekehrt proportional zum *r*₀-Parameter und etwa proportional zur Wellenfrontverzerrung ist.

Die Wellenfrontverzerrung bzw. der *r*₀-Parameter des einfallenden Strahls kann auch mittels des sogenannten DIMM-Prinzips ermittelt werden, das im Artikel von Sarazin, M., Roddier, F.: "The ESO differential image motion monitor", 1990, Astron. Astrophy. 227, Seiten 294-300 beschrieben ist.

Eine Weiterbildung des Verfahrens nach der vorliegenden Erfindung besteht darin, einen Teil des im Empfänger einfallenden Strahls, der Hintergrundlicht-Wellenlängen, beispielsweise 400 nm < λ_{Sonne} < 1000 nm, enthält, mittels eines wellenlängenabhängigen Strahlteilers auf einen Silizium-Photodetektor zu richten, um die Hintergrundlichtmenge zu schätzen, die tatsächlich die Detektoren der beiden Demodulatoren erreicht.

Das Ausgangssignal des mit Direktdetektion arbeitenden Demodulators und das Ausgangssignal des kohärenten, mit Lokaloszillator arbeitenden Demodulators werden zweckmäßig entsprechend einer der herkömmlichen Diversitäts-Kombiniertechniken kombiniert, wie z.B. Selection Combining, Switched Combining, Equal Gain Combining oder Maximum Ratio Combining.

Das signaloptimierende Auswahl- oder Kombinierverfahren kann in einer alternativen Verfahrensform auch durch Analysieren der elektrischen Ausgangssignale der beiden Demodulatoren gesteuert werden.

Dabei werden aus den elektrischen Ausgangssignalen Informationen über die Signalqualität durch Verwendung codierter Übertragungen erhalten, bei denen sendeseitig eine kleine Menge redundanter Daten hinzugefügt ist. Mittels CRC(Cyclic Redundancy Check)-Signalen oder Ausgangssignalen von FEC(Forward Error Correction)-Decodierern kann die laufende Übertragungsqualität jedes Empfängers geschätzt werden. Diese Qualitätsschätzung, gegeben z.B. als eine Zählung von Symbolfehlern, kann dann für die Auswahl- und Kombinierentscheidung benutzt werden.

Bei dieser alternativen Verfahrensform ist es zweckmäßig, dass beide Demodulatoren konstant optische Leistung empfangen und keine Verzerrungsmessung am einfallenden optischen Strahl und keine gesteuerte Verteilung der optischen Leistung vorgenommen wird.

Vorteilhafte Weiterbildungen und Ausgestaltungen des Verfahrens nach der angegebenen Erfindung sind in den sich auf den Patentanspruch 1 unmittelbar oder mittelbar rückbeziehenden Unteransprüchen 2 bis 10 angegeben.

Ein Empfänger zur aufgabengemäßen Verwendung bei einem Verfahren nach der vorliegenden Erfindung zeichnet sich dadurch aus, dass ein inkohärenter, mit Direktdetektion arbeitender Demodulator und ein kohärenter, mit Lokaloszillator arbeitender Demodulator vorgesehen sind, denen zu gleichen oder steuerbar variablen Leistungsanteilen der über ein Empfangsteleskop empfangene Strahl zugeleitet wird, und dass die Ausgänge der beiden Demodulatoren mit einer steuerbaren elektrischen Auswahl- oder Kombiniereinrichtung verbunden sind.

Zur Schätzung der Hintergrundlichtmenge des über das Empfangsteleskop empfangenen Strahls ist in vorteilhafter Weise ein Silizium-Photodetektor vorgesehen, der von der jeweiligen Hintergrundlichtmenge abhängige Steuersignale erzeugt.

Zur Bestimmung der Wellenfrontverzerrung des über das Empfangsteleskop empfangenen Strahls ist im Empfänger vorteilhaft eine Mess- oder Schätzvorrichtung vorgesehen, die von der jeweiligen Wellenfrontverzerrung abhängige Steuersignale erzeugt. Die Messvorrichtung kann eine CCD-Kamera sein, aber auch ein DIMM-Instrument.

Im Anschluss an das Empfangsteleskop ist zweckmäßig ein erster optischer, wellenlängenabhängiger Strahlteiler vorgesehen, der einen kleinen Anteil des empfangenen Strahls an den zur Schätzung der Hintergrundlichtmenge eingesetzten Silizium-Photodetektor weitergibt und den anderen Anteil an einen zweiten optischen Strahlteiler weiterleitet, der einen kleinen Anteil des weitergeleiteten Strahls an die zur Bestimmung der Wellenfrontverzerrung vorgesehene Mess- bzw. Schätzvorrichtung und den anderen Anteil an die beiden Demodulatoren unter geeigneter Leistungsaufteilung weitergibt.

Im Wege des Strahls zwischen dem zweiten optischen Strahlteiler und den beiden Demodulatoren ist zweckmäßig ein von der Mess- bzw. Schätzvorrichtung steuerbarer, variabler Strahlteiler vorgesehen. Der variable Strahlteiler ist hinsichtlich der Aufteilung der Strahlungsleistung auf seine zwei Strahlausgangszweige, die jeweils zu einem der beiden Demodulatoren führen, variabel.

Das Verfahren nach der vorliegenden Erfindung und Ausführungsbeispiele eines Empfängeraufbaus dafür werden im Folgenden anhand von Zeichnungen erläutert. Es zeigen:
- Fig.1: in einer schematischen Ansicht den bekannten und be- reits vorher beschriebenen Aufbau eines optischen Ü- berlagerungsempfängers,
- Fig.2: in einem bereits vorher erläuterten Diagramm die ty- pischen, durch Turbulenzen und Hintergrundlicht ver- ursachten Verschlechterungen bei kohärenter Detektion und Direktdetektionen,
- Fig.3: in einem ebenfalls bereits vorher beschriebenen Dia- gramm beispielhaft die Veränderungen des Fried-Para- meters *r*₀ [m] über den Elevationswinkel [°] für eine optische Satelliten-Downlink-Freiraumverbindung bei verschiedenen Satelliten-Durchläufen, und
- Fig.4: in einer schematischen Ansicht eines Ausführungsbei- spiels die Darstellung des Prinzips eines optischen Empfängeraufbaus, der gemäß dem Verfahren nach der vorliegenden Erfindung ein Signal entsprechend zwei verschiedenen Techniken, nämlich entsprechend der ko- härenten Technik und der Direktdetektionstechnik, de- modulieren kann.

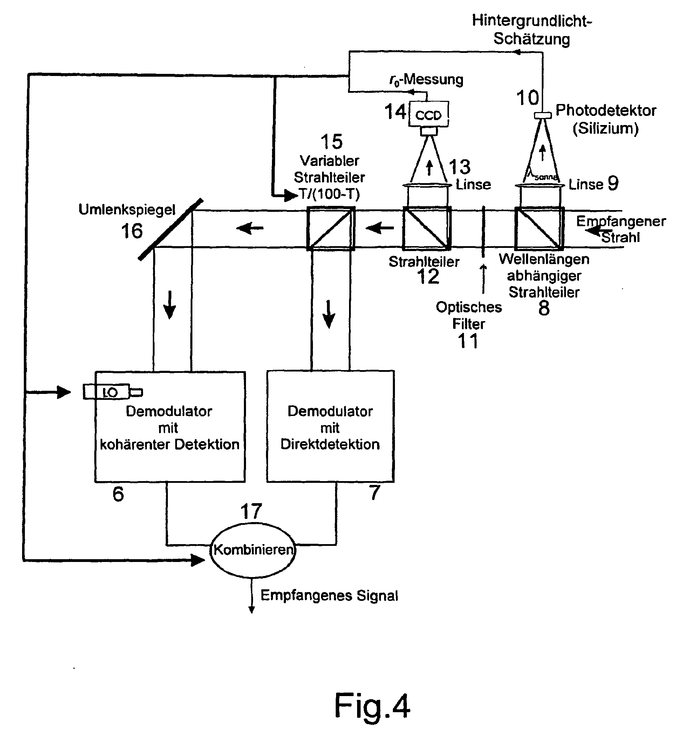

Fig.4 stellt einen durch die Anwendung des Verfahrens nach der vorliegenden Erfindung verbesserten Empfänger mit zwei verfügbaren Detektionsmechanismen dar. Der erste Demodulationsmechanismus besteht aus einem mit kohärenter Detektion arbeitenden Demodulator 6 mit Lokaloszillator LO und der zweite Demodulationsmechanismus aus einem Demodulator 7 mit Direktdetektion. Die beiden verschiedenen Demodulationsmechanismen erzeugen an ihren Ausgängen zwei verschiedene Signale. Da diese beiden Signale die gleichen Informationen, aber mit unterschiedlicher Qualität in Bezug auf das Signal/Rausch-Verhältnis SNR tragen, kann diese Diversität gemäß der vorliegenden Erfindung ausgenutzt und der Signalempfang optimiert werden.

Nachdem der modulierte Laser-Empfangsstrahl in das Teleskop eingetreten ist, wird er kollimiert und auf mehrere optische Elemente gerichtet. Zuerst wird ein Teil des empfangenen Strahls, der Hintergrundlicht-Wellenlängen (beispielsweise 400 nm < λ_{Sonne} < 1000 nm) enthält, mittels eines wellenlängenabhängigen Strahlteilers 8 über eine Linse 9 auf einen Silizium-Photodetektor 10 gerichtet, um die Hintergrundlichtmenge zu schätzen, die tatsächlich die Kommunikationsdetektoren der beiden Demodulatoren 6 und 7 erreicht.

Im Anschluss an ein optisches Filter 11 wird dann ein kleiner Anteil des empfangenen Strahls mittels eines weiteren Strahlteilers 12 über eine Linse 13 auf eine CCD-Kamera 14 für die *r*₀-Messung gerichtet. Obwohl es grundsätzlich mehrere Verfahren zum Schätzen des *r*₀-Parameters gibt, wird dies am mühelosesten durch Beobachten des Brennflecks des Teleskops mit einer CCD-Kamera 14 ausgeführt. Die zum Messen von *r*₀ erforderliche Empfangsleistung ist viel niedriger als die Empfangsleistung eines Signals mit hoher Datenrate, weil die erforderliche Bandbreite der *r*₀-CCD-Kamera 14 viel kleiner ist.

Bei der in Fig.4 dargestellten allgemeinen Version des Diversitätsempfängers werden zwei Strahlen auf die beiden Demodulatoren 6 und 7 gerichtet. Im Einzelnen wird der zweite aus dem Strahlteiler 12 austretende Strahl, d.h. der nicht der CCD-Kamera 14 zugeführte Strahl, einem variablen Strahlteiler 15 zugeführt, von dem einer der beiden austretenden Strahlen dem Demodulator 7 mit Direktdetektion direkt und der andere der beiden austretenden Strahlen über einen Umlenkspiegel 16 dem Demodulator 6 mit kohärenter Detektion zugeführt wird.

Nach Bestimmung der Menge von Hintergrundlicht mittels des Photodetektors 10 und einer mit Hilfe der CCD-Kamera 14 durchgeführten Bestimmung des Werts des Parameters *r*₀ in Bezug auf den Teleskopdurchmesser D richtet der variable Strahlteiler 15 T % der Strahlleistung auf den mit kohärenter Detektion arbeitenden Demodulator 6 und (100-T) % der Strahlleistung auf den mit direkter Detektion arbeitenden Demodulator 7. T ist somit im Wesentlichen proportional zu *r*₀ und umgekehrt proportional zur Verzerrung der Wellenfront des über das Empfangsteleskop einfallenden Strahls.

Das Ausgangssignal des mit direkter Detektion arbeitenden Demodulators 7 und das Ausgangssignal des mit kohärenter Detektion arbeitenden Demodulators 6 werden in einer Kombiniereinrichtung 17 dann entsprechend einer der herkömmlichen Diversitäts-Kombiniertechniken kombiniert, wie z.B. Selection Combining, Switched Combining, Equal Gain Combining oder Maximum Ratio Combining.

Wenn die kohärente Detektion nicht benutzt wird, kann der Lokaloszillator LO abgeschaltet werden, um den Energieverbrauch des Endgeräts zu reduzieren.

Es ist festzustellen, dass das elektrische Kombinieren, also der letzte Schritt in Fig.4, auch durch Analysieren der elektrischen Ausgangssignale beider Demodulatoren 6 und 7 gesteuert werden kann. Informationen über die Signalqualität können durch Verwendung codierter Übertragungen erhalten werden, bei denen eine kleine Menge redundanter Daten hinzugefügt ist. Beispielsweise können CRC (Cyclic Redundancy Check) oder Ausgangssignale von FEC (Forward Error Correction)-Deco-dierern die laufende Übertragungsqualität jedes Empfängers schätzen.

Diese Qualitätsschätzung (gegeben z.B. als eine Zählung von Symbolfehlern) wird dann für die Auswahl- und Kombinierentscheidung benutzt. Bei dieser alternativen Betriebsweise sollten beide Demodulatoren 6 und 7 konstant optische Leistung empfangen. In diesem Fall sind somit die Messung von *r*₀, die Hintergrundlichtmessung und die gesteuerte Verteilung der optischen Leistung nicht mehr notwendig.

### Bezugszeichenliste

- 1: Sammelapertur
- 2: Strahlteiler
- 3: Photodetektor
- 4: Stromverstärker
- 5: Demodulator
- 6: Mit kohärenter Detektion arbeitender Demodulator
- 7: Mit Direktdetektion arbeitender Demodulator
- 8: Wellenlängenabhängiger Strahlteiler
- 9: Linse
- 10: Silizium-Photodetektor
- 11: Optisches Filter
- 12: Strahlteiler
- 13: Linse
- 14: CCD-Kamera
- 15: Variabler Strahlteiler
- 16: Umlenkspiegel
- 17: Kombiniereinrichtung
- E₀: Ebene Welle eines Lokaloszillators
- E_{S}: Empfangssignalwelle
- G: Verstärkung
- I: Detektierter Ausgangsstrom
- LO: Lokaloszillator
- R: Widerstandslast
- *r*₀ [m]: Fried-Parameter

## Patentansprüche

1. Verfahren zur atmosphärischen optischen Freiraumübertragung von digitalen Signalen, wobei sendeseitig ein Laserstrahl mittels einer einen inkohärenten Empfang mit direkter Detektion erlaubenden Modulation, also nicht mit der einen pseudo-inkohärenten Direktdetektionsempfang ermöglichenden DPSK-Modulation moduliert wird und empfangsseitig in einem Demodulator (7) eine inkohärent ausgeführte Direktdetektion vorgenommen wird, **dadurch gekennzeichnet, dass** empfangsseitig zusätzlich in einem kohärenten, mit einem Laser-Lokaloszillator (LO) betriebenen Demodulator (6) eine zweite Detektion durchgeführt wird und dass die zwei mittels der beiden Demodulatoren (6, 7) detektierten elektrischen Signale diversitätsbildend einem signaloptimierenden Auswahl- oder Kombinierverfahren unterzogen werden.

2. Verfahren nach Anspruch 1, **dadurch gekennzeichnet, dass** als Modulationsformat ASK (Amplitude Shift Keying), FSK (Frequency Shift Keying) oder PolSK (Polarisation Shift Keying) verwendet wird.

3. Verfahren nach Anspruch 1 oder 2, **dadurch gekennzeichnet, dass** Wellenfrontverzerrungen des empfangsseitig einfallenden optischen Strahls gemessen oder geschätzt werden und dass in Abhängigkeit von der gemessenen bzw. geschätzten Wellenfront-verzerrung auf den einen oder anderen der beiden Demodulatoren (6 bzw. 7) mehr optische Leistung auf Kosten des jeweils anderen Demodulators gerichtet wird.

4. Verfahren nach Anspruch 3, **dadurch gekennzeichnet, dass** die Wellenfrontverzerrungen des einfallenden optischen Strahls anhand des sogenannten Fried-Parameters *r*₀ bestimmt werden, der auch als Kohärenzdurchmesser bezeichnet wird, wobei gilt, dass je kleiner der Parameter *r*₀ ist, desto größer die Wellenfrontverzerrungen sind.

5. Verfahren nach Anspruch 3 oder 4, **dadurch gekennzeichnet, dass** die Wellenfrontverzerrung des einfallenden Strahls mittels einer CCD-Kamera (14) bestimmt wird, der ein abgezweigter Teilstrahl des über ein Empfangsteleskop einfallenden Strahls zugeführt wird, wobei mit der CCD-Kamera der Brennfleck des Empfangsteleskops beobachtet und aus der Größe des Brennflecks auf die Wellenfront-Verzerrung des einfallenden Strahls geschlossen wird und wobei gilt, dass die mittlere Größe des Brennflecks umgekehrt proportional zum *r*₀-Parameter und etwa proportional zur Verzerrung der Wellenfront ist.

6. Verfahren nach Anspruch 3 oder 4, **dadurch gekennzeichnet, dass** die Wellenfrontverzerrung bzw. der *r*₀-Parameter des einfallenden Strahls mittels des DIMM-Prinzips ermittelt wird.

7. Verfahren nach einem der vorhergehenden Ansprüche, **dadurch gekennzeichnet, dass** ein Teil des im Empfänger einfallenden Strahls, der Hintergrundlicht-Wellenlängen, z.B. 400 nm < λ_{Sonne} < 1000 nm, enthält, mittels eines wellenlängenabhängigen Strahlteilers (8) auf einen Silizium-Photodetektor (10) gerichtet wird, um die Hintergrundlichtmenge zu schätzen, die tatsächlich die Detektoren der beiden Demodulatoren (6, 7) erreicht.

8. Verfahren nach einem der vorhergehenden Ansprüche, **dadurch gekennzeichnet, dass** das Ausgangssignal des mit Direktdetektion arbeitenden Demodulators (7) und das Ausgangssignal des kohärenten, mit Lokaloszillator (LO) arbeitenden Demodulators (6) entsprechend einer der herkömmlichen Diversitäts-Kombiniertechniken kombiniert werden, wie z.B. Selection Combining, Switched Combining, Equal Gain Combining oder Maximum Ratio Combining.

9. Verfahren nach Anspruch 1, **dadurch gekennzeichnet, dass** das signaloptimierende Auswahl- oder Kombinierverfahren durch Analysieren der elektrischen Ausgangssignale der beiden Demodulatoren (6, 7) gesteuert wird, wobei aus den elektrischen Ausgangssignalen der beiden Demodulatoren Informationen über die Signalqualität durch Verwendung codierter Übertragungen erhalten werden, bei denen sendeseitig eine kleine Menge redundanter Daten hinzugefügt ist, dass CRC(Cyclic Redundancy Check)-Signale oder Ausgangssignale von FEC (Forward Error Correction)-Decodierern die laufende Übertragungsqualität im Empfänger schätzen und dass diese Qualitätsschätzung, gegeben z.B. als eine Zählung von Symbolfehlern, dann für die Auswahl- und Kombinierentscheidung benutzt wird.

10. Verfahren nach Anspruch 9, **dadurch gekennzeichnet, dass** beide Demodulatoren (6, 7) konstant optische Leistung empfangen und keine Wellenfront-Verzerrungsmessung am einfallenden optischen Strahl und keine gesteuerte Verteilung der optischen Leistung vorgenommen wird.

11. Empfänger zur Verwendung bei einem Verfahren nach einem der vorhergehenden Ansprüche, **dadurch gekennzeichnet, dass** ein inkohärenter, mit Direktdetektion arbeitender Demodulator (7) und ein kohärenter, mit Lokaloszillator (LO) arbeitender Demodulator (6) vorgesehen sind, denen zu gleichen oder steuerbar variablen Leistungsanteilen der über ein Empfangsteleskop empfangene Strahl zugeleitet wird, und dass die Ausgänge der beiden Demodulatoren mit einer steuerbaren elektrischen Auswahl- oder Kombiniereinrichtung (17) verbunden sind.

12. Empfänger nach Anspruch 11, **dadurch gekennzeichnet, dass** zur Schätzung der Hintergrundlichtmenge des über das Empfangsteleskop empfangenen Strahls ein Silizium-Photodetektor (10) vorgesehen ist, der von der jeweiligen Hintergrundlichtmenge abhängige Steuersignale erzeugt.

13. Empfänger nach Anspruch 11, **dadurch gekennzeichnet, dass** zur Bestimmung der Wellenfrontverzerrung des über das Empfangsteleskop empfangenen Strahls eine durch eine CCD-Kamera (14) realisierbare Messvorrichtung oder eine Schätzvorrichtung vorgesehen ist, die von der jeweiligen Wellenfrontverzerrung abhängige Steuersignale erzeugt.

14. Empfänger nach einem der Anspruch 11 bis 13, **dadurch gekennzeichnet, dass** im Anschluss an das Empfangsteleskop ein optischer, wellenlängenabhängiger Strahlteiler (8) vorgesehen ist, der einen kleinen Anteil des empfangenen Strahls an den zur Schätzung der Hintergrundlichtmenge eingesetzten Silizium-Photodetektor (10) weitergibt und den anderen Anteil an einen zweiten optischen Strahlteiler (12) weiterleitet, der einen kleinen Anteil des weitergeleiteten Strahls an die zur Bestimmung der Wellenfrontverzerrung vorgesehene Mess- bzw. Schätzvorrichtung (14) und den anderen Anteil an die beiden Demodulatoren (6, 7) unter geeigneter Leistungsaufteilung weitergibt.

15. Empfänger nach Anspruch 14, **dadurch gekennzeichnet, dass** im Wege des Strahls zwischen dem optischen Strahlteiler (12) und den beiden Demodulatoren (6, 7) ein von der Mess- bzw. Schätzvorrichtung (14) steuerbarer, hinsichtlich der Aufteilung der Strahlungsleistung auf seine zwei jeweils zu einem der beiden Demodulatoren führenden Strahlausgangszweige variabler Strahlteiler (15) vorgesehen ist.

## Claims

1. Method for atmospheric optical free space transmission of digital signals, wherein, on the transmitting side, a laser beam is modulated by means of a modulation allowing an incoherent reception with direct detection, that is a laser beam that is not modulated with DPSK modulation, allowing a pseudo-incoherent direct detection receipt, and wherein, on the receiving side, an incoherently performed direct detection is effected in a demodulator (7), **characterized in that**, on the receiving side, a second detection is performed in addition in a coherent demodulator (6) operated with a laser local oscillator (LO), and that the two electrical signals detected by means of the two demodulators (6, 7) are subjected to a signal-optimizing selection or combination method in a manner forming diversity.

2. Method of claim 1, **characterized in that** the modulation format used is ASK (Amplitude Shift Keying), FSK (Frequency Shift Keying) or PolSK (Polarization Shift Keying).

3. Method of claim 1 or 2, **characterized in that** wave front distortions of the optical beam impinging on the receiving side are measured or estimated, and that, depending on the measured or estimated wave front distortion, more optical power is directed to the one or the other of the two demodulators (6 or 7) at the expense of the respective other demodulator.

4. Method of claim 3, **characterized in that** the wave front distortions of the impinging optical beam are determined by the so-called Fried parameter r₀ which is also referred to as coherence diameter, wherein: the smaller the parameter r₀, the greater the wave front distortions.

5. Method of claim 3 or 4, **characterized in that** the wave front distortion of the impinging beam is determined by means of a CCD camera (14) which is supplied with a branched-off partial beam of the beam impinging through a receiving telescope, wherein the CCD camera is used to observe the focal spot of the receiving telescope and the wave front distortion of the impinging beam is concluded from the size of the focal spot, and where it is true that the mean size of the focal spot is inversely proportional to the r₀ parameter and approximately proportional to the distortion of the wave front.

6. Method of claim 3 or 4, **characterized in that** the wave front distortion or the r₀ parameter of the impinging beam is determined using the DIMM principle.

7. Method of one of the preceding claims, **characterized in that** a part of the beam impinging in the receiver, which includes background light wavelengths, e.g. 400 nm < λ_{SUN} < 1000 nm, is directed onto a silicon photo detector (10) by means of a wavelength-dependent beam splitter (8), in order to estimate the background light quantity that actually reaches the detectors of the two demodulators (6, 7).

8. Method of one of the preceding claims, **characterized in that** the output signal of the demodulator (7) operating with direct detection and the output signal of the coherent demodulator (6) operating with a local oscillator (LO) are combined in accordance with one of the conventional diversity combining techniques, such as Selection Combining, Switched Combining, Equal Gain Combining, or Maximum Ratio Combining.

9. Method of claim 1, **characterized in that** the signal-optimizing selection or combination method is controlled by analyzing the electrical output signals of the two demodulators (6, 7), wherein information about the signal quality is obtained from the electrical output signals of the two demodulators by using encoded transmissions to which a small quantity of redundant data is added on the transmitting side, that CRC (Cyclic Redundancy Check) signals or output signals of FEC (Forward Error Correction) decoders estimate the current transmission quality in the receiver, and that this quality estimate, e.g. in the form of a symbol error count, is then used in the selection and combination decision.

10. Method of claim 9, **characterized in that** both demodulators (6, 7) constantly receive optical power and no wave front distortion measuring is performed on the impinging optical beam and no controlled distribution of the optical power is made.

11. Receiver for use with a method of one of the preceding claims, **characterized in that** an incoherent demodulator (7) operating with direct detection and a coherent demodulator (6) operating with a local oscillator (LO) are provided to which is fed, in equal or controllably variable power proportions, the beam received through a receiving telescope, and that the outputs of both demodulators are connected with a controllable electrical selection and combination means (17).

12. Receiver of claim 11, **characterized in that** a silicon photo detector (10) is provided for estimating the background light quantity of the beam received through the receiving telescope, which photo detector generates control signals depending on the respective background light quantity.

13. Receiver of claim 11, **characterized in that** a measuring device, which could be realized by a CCD camera (14), or an estimating device is provided for determining the wave front distortion of the beam received via the receiving telescope, which device generates control signals depending on the respective wave front distortion.

14. Receiver of one of claims 11 to 13, **characterized in that** an optical, wavelength-dependent beam splitter (8) is provided downstream of the receiving telescope, which supplies a small part of the received beam to the silicon photo detector (10) used for estimating the background light quantity and which supplies the other part on to a second optical beam splitter (12) that passes a small part of the transmitted beam to the measuring or estimating device (14) provided for determining the wave front distortion and passes the other part on to the two demodulators (6, 7) with the power being split adequately.

15. Receiver of claim 14, **characterized in that** a beam splitter (15) is provided along the beam path between the optical beam splitter (12) and the two demodulators (6, 7), said beam splitter being controllable by the measuring or estimating device (14) and being variable with respect to the distribution of the radiated power between its two radiation output branches respectively leading to one of the two demodulators.

## Revendications

1. Procédé destiné à la transmission d'espace vide optique atmosphérique de signaux numériques, dans lequel, au côté émetteur, un rayon laser est modulé par une modulation permettant la réception incohérente à détection directe, c'est à dire qu'il n'est pas modulé par la modulation DPSK permettant la réception pseudo-incohérente à détection directe, et que l'on fait, au côté récepteur, une détection directe effectuée d'une manière incohérente dans un démodulateur (7), **caractérisé en ce qu'**au côté récepteur, l'on fait de plus une deuxième détection dans un démodulateur (6) cohérent actionné par un oscillateur local à laser (LO), et que les deux signaux électriques détectés par les deux démodulateurs (6, 7) sont soumises à un procédé de sélection ou de combinaison optimisant les signaux pour obtenir une diversité.

2. Procédé selon la revendication 1, **caractérisé en ce que** le format de modulation utilisé est ASK (modulation par déplacement d'amplitude), FSK (modulation par déplacement de fréquence) ou PoISK (modulation par déplacement de polarisation).

3. Procédé selon la revendication 1 ou 2, **caractérisé en ce que** des distorsions du front d'onde du rayon optique incident au côté récepteur sont mesurées ou estimées, et qu'en fonction de la distorsion du front d'onde mesurée ou estimée, plus de puissance optique est dirigée vers l'un ou l'autre des deux démodulateurs (6 ou 7) au dépens de l'autre démodulateur respectif.

4. Procédé selon la revendication 3, **caractérisé en ce que** les distorsions du front d'onde du rayon optique incident sont déterminées à l'aide d'un paramètre appelé paramètre de Fried r₀, aussi appelé diamètre de cohérence, où: plus petit est le paramètre r_{β}, plus grandes sont les distorsions du front d'onde.

5. Procédé selon la revendication 3 ou 4, **caractérisé en ce que** la distorsion du front d'onde du rayon incident est déterminée à l'aide d'une caméra CCD (14) à laquelle est fourni un rayon partiel branché dudit rayon incident à travers un télescope récepteur, le point focal du télescope récepteur étant observé à l'aide de ladite caméra CCD, et la distorsion du front d'ode du rayon incident étant conclue de la taille du point focal, et où il est vrai que la taille moyenne dudit point focal est inversement proportionnelle au paramètre r₀ et approximativement proportionnelle à la distorsion du front d'onde.

6. Procédé selon la revendication 3 ou 4, **caractérisé en ce que** la distorsion du front d'onde ou le paramètre r₀ dudit rayon incident est déterminé selon le principe DIMM.

7. Procédé selon !'une quelconque des revendications précédentes, **caractérisé en ce qu'**un part du rayon incident dans le récepteur, qui contient des longueurs d'onde de la lumière de fond, p. ex. 400 nm < λ_{SOLEIL} < 1000 nm, est dirigé sur un photodétecteur à silicium (10) à l'aide d'une lame séparatrice (8) dépendant de la longueur d'onde, afin d'estimer la quantité de la lumière de fond effectivement arrivant aux détecteurs des deux démodulateurs (6, 7).

8. Procédé selon l'une quelconque des revendications précédentes, **caractérisé en ce que** le signal de sortie du démodulateur (7) à détection directe et le signal de sortie du démodulateur cohérent (6) à oscillateur local (LO) sont combinés selon une des méthodes conventionnelles, pour exemple Selection Combining, Switched Combining, Equal Gain Combining ou Maximum Ratio Combining.

9. Procédé selon la revendication 1, **caractérisé en ce que** le procédé de sélection ou de combinaison optimisant les signaux est commandé par l'analyse des signaux de sortie des deux démodulateurs (6, 7), des informations sur la qualité des signaux étant obtenus des signaux de sortie électriques des deux démodulateurs à l'aide de transmissions codées, dans lesquelles des petites quantités de données de rédondance sont introduites au côté émetteur, que des signaux CRC (Cyclic Redundancy Check) ou des signaux de sortie de décodeurs FEC (Forward Error Correction) estiment la qualité de transmission actuelle dans le récepteur, et que cette estimé de qualité, pour exemple sous forme d'un compte des erreurs des symboles, est utilisée dans la décision de sélection et combinaison.

10. Procédé selon la revendication 9, **caractérisé en ce que** les deux démodulateurs (6, 7) constamment reçoivent de la puissance optique et qu'une mesure de la distorsion du front d'onde n'est pas effectuée au rayon incident et qu'une distribution commandée de la puissance optique n'est pas effectuée.

11. Récepteur pour l'utilisation dans un procédé selon l'une quelconque des revendications précédentes, **caractérisé en ce que** l'on prévoit un démodulateur incohérent (7) à détection directe et un démodulateur cohérent (6) à oscillateur local (LO), auxquels est fourni, en quote-parts de la puissance égaux ou variable par commande, le rayon reçu à l'aide d'un télescope récepteur, et que les sorties des deux démodulateurs sont connectées à un moyen de sélection ou combinaison (17) électrique commandable.

12. Récepteur selon la revendication 11, **caractérisé en ce que** l'on prévoit un photodétecteur à silicium (10) pour estimer la quantité de la lumière de fond du rayon reçu à l'aide du télescope récepteur, ledit photodétecteur générant des signaux de commande dépendant de chaque quantité de la lumière du fond.

13. Récepteur selon la revendication 11, **caractérisé en ce que** l'on prévoit un dispositif de mesure ou un dispositif d'estimation, réalisable sous forme d'une caméra CCD (14), pour déterminer la distorsion du front d'onde dudit rayon reçu à l'aide dudit télescope récepteur, ledit dispositif générant des signaux de commande dépendent de la distorsion du front d'onde respective.

14. Récepteur selon l'une quelconque des revendications 11 à 13, **caractérisé en ce qu'**une lame séparatrice (8) optique dépendant de la longueur d'onde est prévue en aval du télescope récepteur, ladite lame séparatrice passant un petit part du rayon reçu au photodétecteur à silicium (10) utilisé pour estimer la quantité de la lumière de fond et passant l'autre part à une deuxième lame séparatrice (12) optique qui fournit un petit part du rayon passé au dispositif de mesure ou d'estimation (14) prévu pour déterminer la distorsion du front d'onde et fournit l'autre part aux deux démodulateurs (6, 7) avec une distribution de puissance adéquate.

15. Récepteur selon la revendication 14, **caractérisé en ce que** dans le chemin du rayon entre ladite lame séparatrice optique (12) et les deux démodulateurs (6, 7), l'on prévoit une lame séparatrice (15) qui est apte à être commandée par le dispositif de mesure ou d'estimation (14) et variable en regard de la distribution de la puissance radiante sur ses deux branches de sortie de rayon respectivement menant à un des deux démodulateurs.
